# FASCICULE DE BREVET EUROPEEN

(11) **EP 3 005 535 B1**
(45) Date de publication et mention de la délivrance du brevet: **18.12.2019**
(21) Numéro de dépôt: 14733265.4
(22) Date de dépôt: 05.06.2014
(51) Int. Cl.: H02K 3/52, H02K 5/22, H02K 5/24, H02K 11/20, H02K 11/21, H02K 11/25

(54) **MACHINE ELECTRIQUE MUNIE D'UN SYSTEME DE GUIDAGE D'AU MOINS UN FIL DE CONNEXION D'UNE SONDE DE MESURE ET SYSTEME DE GUIDAGE CORRESPONDANT**
MIT EINEM SYSTEM ZUR FÜHRUNG VON MINDESTENS EINEM VERBINDUNGSDRAHT EINER MESSSONDE AUSGESTATTETE ELEKTRISCHE MASCHINE UND ZUGEHÖRIGES FÜHRUNGSSYSTEM
ELECTRIC MACHINE FURNISHED WITH A SYSTEM FOR GUIDING AT LEAST ONE CONNECTION WIRE OF A MEASUREMENT PROBE AND CORRESPONDING GUIDING SYSTEM

(30) Priorité: 05.06.2013 FR 1355150
(43) Date de publication de la demande: 13.04.2016
(73) Titulaire: Valeo Equipements Electriques Moteur, 94046 Créteil Cedex (FR)
(72) Inventeur: LE DOUARIN, Michel, F-92330 Sceaux (FR); GERVAIS, Hugues, F-77186 Noisiel (FR); HANQUEZ,Michaël, F-94000 Creteil (FR); CAMBRONNE, Olivier, F-62780 Cucq (FR); JUGOVIC, Svetislav, F-91260 Juvisy-sur-Orge (FR)
(74) Mandataire: Tran, Chi-Hai
(86) Numéro de dépôt international: PCT/FR2014/051338
(87) Numéro de publication internationale: WO 2014/195643

(56) Documents cités:
- EP-A2- 2 124 320
- DE-A1- 2 535 609
- DE-A1- 4 304 709
- FR-A1- 2 825 200

## Description

### DOMAINE TECHNIQUE DE L'INVENTION

L'invention porte sur une machine électrique munie d'un système de guidage d'au moins un fil de connexion d'une sonde de mesure, telle qu'une sonde de température et/ou un capteur de position, ainsi que sur le système de guidage correspondant.

L'invention se rapporte au domaine des machines électriques telles que les moteurs, les alternateurs, ou les alterno-démarreurs.

L'invention trouve une application particulièrement avantageuse avec les alternateurs utilisés dans des systèmes dits "range-extender" destinés à augmenter l'autonomie des véhicules électriques. Ces systèmes comportent à cet effet un moteur thermique de faible puissance entraînant mécaniquement en rotation l'alternateur destiné à fournir, quand cela est nécessaire, de l'énergie électrique à des batteries d'alimentation d'un moteur électrique de traction du véhicule.

### ARRIERE PLAN TECHNOLOGIQUE DE L'INVENTION

On connaît des machines électriques comportant un stator et un rotor solidaire d'un arbre. Le rotor pourra être solidaire d'un arbre menant et/ou menée et pourra appartenir à une machine électrique tournante sous la forme d'un alternateur comme décrit dans le document EP0803962 ou d'un moteur électrique comme décrit dans le document EP0831580.

La machine électrique comporte un boîtier portant le stator. Ce boîtier est configuré pour porter à rotation l'arbre par exemple par l'intermédiaire de roulements, tel que des roulements à billes et/ou à aiguilles. Le rotor pourra comporter un corps réalisé en tôle feuilletée, qui comporte des logements. Des aimants permanents sont positionnés à l'intérieur d'au moins certains de ces logements comme visible par exemple dans les figures 1 et 2 du document EP0803962.

Comme décrit dans le document FR2890798 auquel on se reportera pour plus de précisions, la machine comporte un rotor et un corps de stator sous la forme d'un paquet de tôles doté de dents pour le montage de bobines appartenant au bobinage du stator. Le corps du stator comporte des encoches ouvertes vers l'intérieur délimitées chacune par deux dents consécutives. Ces dents sont à bords parallèles, une bande de matière, appelée culasse existant entre le fond des encoches et la périphérie externe du corps. Dans ce document la machine électrique est polyphasée et comporte un bobinage de stator comportant plusieurs bobines préformées. Plus précisément, on monte sur les dents du corps du stator les bobines préformées réalisées à partir d'un fil enroulé sur plusieurs tours. Les fils consistent par exemple en un fil de cuivre revêtu d'émail.

A cet effet, chaque bobine est montée autour d'un isolant d'encoche électriquement isolant comportant des rebords définissant une gorge de montage de la bobine. Dans une forme de réalisation, deux bobines sont implantées dans une même encoche.

Les bobines sont interconnectées entre elles à l'aide d'un interconnecteur compact pour former les différentes phases de la machine. A cette fin, l'interconnecteur en appui contre le stator comporte plusieurs cadres annulaires, dont un relié au neutre de la machine, munis chacun d'une pluralité de languettes auxquelles sont soudées les extrémités des fils de bobine.

Un capteur de température et/ou un capteur de position est implanté à l'intérieur de la machine. Ce capteur est relié à l'étage de puissance comportant l'onduleur et l'étage de commande comme cela est décrit par exemple dans le document EP031580. L'étage de commande régule l'alimentation de la machine électrique en fonction de son état thermique pour éviter son endommagement.

La sonde ou le capteur de position étant reliés à leur connecteur déporté respectif par l'intermédiaire d'au moins un fil de connexion, il existe le besoin d'éviter la mise en contact dudit fil de connexion avec les pièces de fonderie de son environnement, en particulier le boîtier de la machine, afin de le préserver de l'usure et cela, quelles que soient les conditions de sollicitations vibratoires ou thermiques.

### OBJET DE L'INVENTION

L'invention vise à combler ce besoin en proposant une machine électrique tournante caractérisée en ce qu'elle comporte un stator muni de dents autour desquelles sont enroulées un ensemble de bobines, un interconnecteur annulaire en appui sur le stator muni de languettes auxquelles sont soudées des extrémités des bobines pour formation de phases de la machine électrique, et au moins une sonde de température reliée à un connecteur déporté par l'intermédiaire d'au moins un fil de connexion, et en ce qu'elle comporte en outre un système guidage configuré pour assurer un guidage du fil de connexion autour de l'interconnecteur entre ladite sonde de température et ledit connecteur déporté, ledit système de guidage étant intégré dans un amortisseur annulaire destiné à être monté compressé entre l'interconnecteur et un flasque de fermeture de la machine électrique.

Ainsi, le système de guidage permet d'éviter que le fil de connexion entre en contact avec les pièces de fonderie de son environnement. L'invention permet ainsi de préserver le fil de connexion de tout endommagement au cours de l'utilisation de la machine pouvant conduire à sa mise à la masse ou à sa totale coupure par frottement.

Selon une réalisation, le système de guidage est configuré en outre pour assurer un guidage du fil de connexion depuis un point de mesure (pour la mesure de la température) à proximité de l'interconnecteur jusqu'au connecteur déporté.

Selon une réalisation, le système de guidage comporte une réserve de fil. Selon une réalisation, la réserve de fil est ménagée dans une portion du système de guidage s'étendant entre le point de mesure à proximité de l'interconnecteur et le connecteur déporté.

Selon une réalisation, le système de guidage comporte une gorge à l'intérieur de laquelle est positionné le fil de connexion munie de rétrécissements de section locaux pour le maintien du fil de connexion. Selon une réalisation, le système de guidage est formé par deux clips comportant chacun une gorge de passage du fil de connexion destinés à être maintenus sur l'interconnecteur par encliquetage.

Selon une réalisation, les clips sont reliés entre eux par une partie intermédiaire munie d'une gorge de passage du fil de connexion située dans le prolongement des gorges des deux clips de manière à former une pièce d'un seul tenant.

Selon une réalisation, le système de guidage est formé par un ensemble d'au moins deux pions comportant une ouverture autorisant un passage du fil de connexion destinés à coopérer avec une partie de l'interconnecteur.

Selon une réalisation, les pions sont aptes à coopérer avec des protubérances s'étendant en saillie radiale depuis une périphérie externe de l'interconnecteur.

Selon une réalisation, les pions sont aptes à coopérer avec un décrochement radial d'un pied d'appui de l'interconnecteur.

Selon une réalisation, un troisième pion est situé entre l'interconnecteur et le connecteur déporté.

Selon une réalisation, le système de guidage est formé par au moins deux éléments élastiques munis chacun d'une gorge pour le passage du fil de connexion aptes à être maintenus coincés entre un pied d'appui de l'interconnecteur et une face interne d'un boîtier de la machine électrique. Selon une réalisation, le système de guidage est formé par un élément élastique unique de forme allongée muni d'une gorge pour le passage du fil de connexion s'étendant circonférentiellement le long d'un pied d'appui de l'interconnecteur en étant maintenu coincé entre ledit pied d'appui et une face interne d'un boîtier de la machine électrique.

Selon une réalisation, le système de guidage prend la forme d'une goulotte maintenue par encliquetage au moyen d'ergots sur un pied d'appui de l'interconnecteur et dans une zone d'un boîtier de la machine électrique située entre l'interconnecteur et le connecteur déporté.

Selon une réalisation, le système de guidage est formé par au moins un volume de résine polymérisable à température ambiante positionné sur le pied d'appui de l'interconnecteur.

### BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.
Les figures 1a et 1b montrent respectivement des vues en perspective d'une partie d'un stator seul et d'un stator bobiné appartenant à la machine électrique selon l'invention ;
La figure 2 montre, suivant une vue en perspective, un isolant de bobine destiné à être monté sur les dents du stator de la figure 1b;
La figure 3a montre une vue en perspective de l'interconnecteur utilisé avec la machine électrique selon l'invention;
La figure 3b représente une vue en perspective d'un cadre de phase de l'interconnecteur de la figure 3a;
La figure 3c est une vue en coupe transversale de l'interconnecteur de la figure 3a;
La figure 4a montre une vue en perspective du stator bobiné de la figure 1b monté à l'intérieur du boîtier de la machine électrique munie d'un système de guidage d'au moins un fil de sonde de température selon l'invention intégré à un amortisseur;
La figure 4b représente une vue détaillée du système de guidage de la figure 4a;
La figure 5 montre une vue en perspective éclatée du boîtier, du stator bobiné de la figure 1b, de l'amortisseur intégrant le système de guidage selon l'invention et d'un flasque de fermeture fermant le boîtier de la machine électrique selon l'invention;
La figure 6 montre une vue en perspective de la face interne du flasque de fermeture du boîtier de la machine électrique selon l'invention;
Les figures 7 à 14 montrent des variantes de réalisation du système de guidage d'au moins un fil de connexion de la sonde de température selon l'invention et de son implantation à l'intérieur de la machine électrique, l'interconnecteur sur lequel est monté le système de guidage étant vu en coupe transversale sur les figures 7a, 9a et 10a.

Les éléments identiques, similaires ou analogues conservent la même référence d'une figure à l'autre.

### DESCRIPTION D'EXEMPLES DE REALISATION DE L'INVENTION

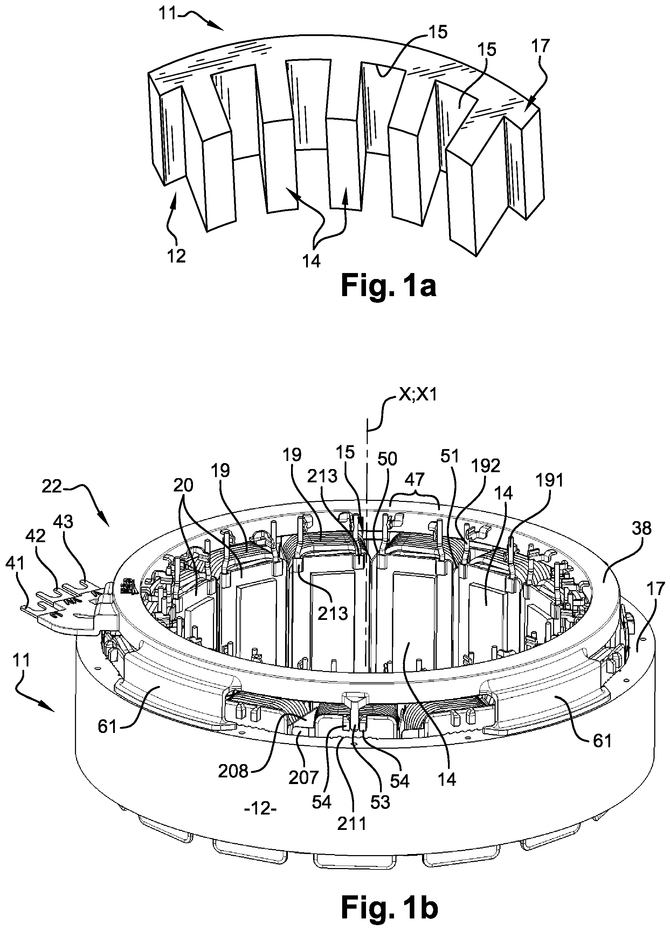

Les figures 1a et 1b montrent un stator 11 d'axe X ayant un corps 12 comportant des dents 14 réparties régulièrement sur la périphérie interne ainsi que des encoches 15 ouvertes vers l'intérieur, deux encoches 15 consécutives étant séparées par une dent 14. Ces dents 14 sont à bords parallèles deux à deux, une bande de matière, correspondant à la culasse 17 existant entre le fond des encoches 15 et la périphérie externe du corps 12. Le corps 12 est formé par un empilement de tôles réalisées en matière ferromagnétique s'étendant dans un plan radial perpendiculaire à l'axe X. Le paquet de tôles est maintenu au moyen de rivets (non représentés) traversant axialement de part en part l'empilement des tôles, ou par collage.

Le stator 11 appartient à une machine électrique tournante polyphasée comportant un bobinage de stator doté de plusieurs bobines 19, ici préformées, et d'un point neutre, dit neutre de la machine, visible par exemple à la figure 1 du document EP0831580. Les bobines 19 sont interconnectées entre elles à l'aide d'un interconnecteur 22 compact comportant plusieurs cadres 31-34 dont l'un 31, dit cadre de neutre 31 est relié au neutre de la machine électrique tournante.

Plus précisément, comme cela est visible sur la figure 1b, on monte sur les dents 14 du stator les bobines 19 préformées formant le bobinage du stator 11. Ces bobines 19 sont réalisées à partir d'un fil enroulé sur plusieurs tours. Les fils consistent en un fil électriquement conducteur, par exemple en un fil de cuivre et/ou d'aluminium, revêtu d'un isolant électrique, tel que de l'émail. Les fils peuvent être de section circulaire, rectangulaire ou en forme de méplat. Dans une forme de réalisation, deux bobines 19 sont implantées dans une même encoche 15, chaque bobine 19 étant enroulée autour de l'une des dents 14 métallique délimitant l'encoche par l'intermédiaire d'un isolant de bobine 20.

Les extrémités 191, 192 de chaque bobine 19 dépassent axialement du bobinage d'un même côté du stator 11 correspondant sur la figure 1b au côté supérieur du stator 11. Chaque bobine 19 comporte une première extrémité 191 appelée "entrée" destinée à être connectée avec les autres entrées de manière alternée pour appartenir à une des phases U, V, W de la machine et une deuxième extrémité 192 appelée "sortie" destinée à être reliée au neutre de la machine électrique. Les bobines 19 sont ainsi interconnectées entre elles pour former les différentes phases U, V, W à l'aide de l'interconnecteur 22 d'axe X1 confondu avec l'axe X lorsque l'interconnecteur 22 est installé sur le stator 11.

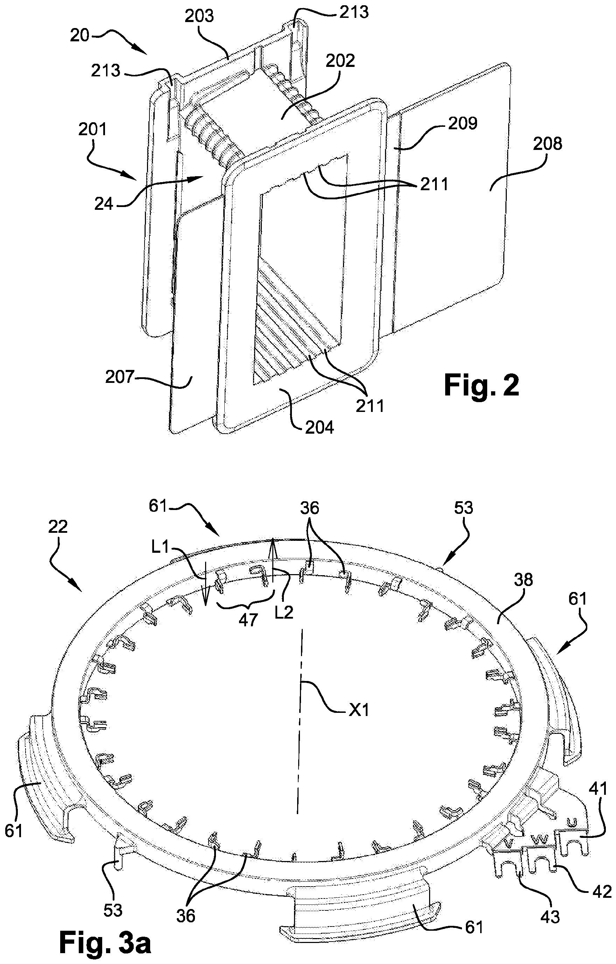

Plus précisément, l'isolant 20 de bobine est réalisé en matière électriquement isolante et moulable par exemple en matière plastique telle que du PA 6.6, qui pourra être renforcé par des fibres, telles que des fibres de verre. Comme montré sur la figure 2, l'isolant de bobine 20 comporte un corps 201 formé par un cadre 202 ainsi qu'un rebord avant 203 et un rebord arrière 204 définissant avec les parois du cadre 202 une gorge de montage de la bobine 19. Le rebord arrière 204, destiné à être positionné du côté de la culasse 17, est prolongé d'un côté par un talon 207; et de l'autre par une ailette 208 destinée à être rabattue vers un côté de la bobine via une zone de pliage 209. Le talon 207 est moins épais et moins large que l'ailette 208. Le talon 207 permet d'augmenter l'isolation électrique entre la culasse 17 et la bobine 19 concernée. Dans d'autres modes de réalisation, l'ailette 208 pourra être maintenue en position contre le côté de la bobine au moyen d'un système d'encliquetage de l'ailette 208 sur le rebord opposé à celui dont elle est issue.

L'isolant 20 de bobine comporte en outre des rainures 211 ménagées dans les faces internes des parois supérieure et inférieure du cadre 24. De préférence, les bordures longitudinales du rebord avant 203 sont configurées à une de leurs extrémités 213 pour servir de guide fil pour chaque extrémité 191, 192 de la bobine 19.

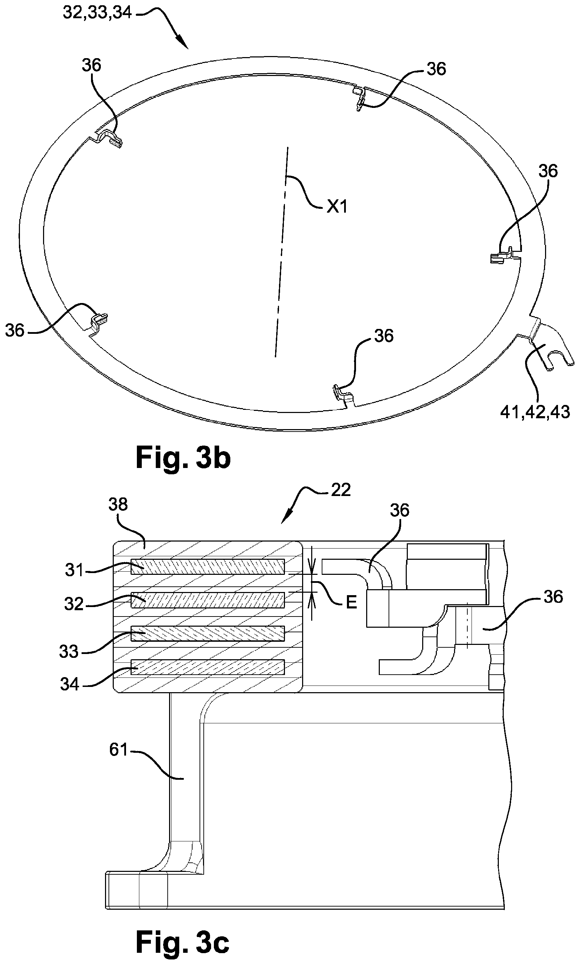

Par ailleurs, l'interconnecteur 22 montré sur les figures 3a à 3c comporte quatre cadres 31-34 de forme annulaire s'étendant suivant un plan radial. Les cadres 31-34 sont électriquement conducteurs en étant par exemple en cuivre ou avantageusement en un autre matériau métallique soudable et conducteur électrique. Le diamètre externe des cadres 31-34, correspondant sensiblement au diamètre externe de l'interconnecteur 22, est inférieur au diamètre externe du stator 11, constitué par le diamètre externe de la culasse 17, pour faciliter une opération d'imprégnation des bobines 19 et réduction de l'encombrement diamétral. Ces cadres 31-34 sont empilés axialement les uns sur les autres et isolés électriquement entre eux (cf. figure 3c). Comme cela est bien visible sur les figures 3a et 3b, chaque cadre 31-34 porte sur sa périphérie interne des languettes 36 apparentes s'étendant en saillie radiale vers l'intérieur du cadre pour le soudage des extrémités 191, 192 des bobines du stator. De préférence, les cadres 31-34 sont noyés dans un corps 38 réalisé en matériau électriquement isolant, tel que de la matière plastique. Une couche de matière électriquement isolante 38 d'épaisseur E est présente entre chaque cadre comme visible à la figure 3c.

Un des cadres 31, dit cadre neutre, est destiné à être relié au neutre du bobinage de la machine électrique comprenant les bobines 19 agencées ici selon un montage en étoile avec un point neutre constitué à la faveur du cadre 31. Ce cadre de neutre 31 est situé à une extrémité de l'empilement des cadres 31-34, ici à l'extrémité la plus éloignée de la culasse 17. Etant donné que chaque bobine 19 a une extrémité de sortie 192 reliée au neutre, le cadre 31 de neutre comporte un nombre de languettes 36 égal au nombre de bobines 19, en l'occurrence égal à 15.

Les trois autre cadres 32-34, dit cadres de phase, sont destinés à être reliés chacun aux entrées 191 des bobines 19 de la phase U, V, W concernée la machine électrique, ici de type triphasée. Les extrémités d'entrée 191 des bobines 19 sont ainsi alternativement reliées circonférentiellement aux sorties de phase du bobinage de la machine électrique par l'intermédiaire d'un des cadres 32-34 de phase de l'interconnecteur 22. Chaque phase comporte cinq bobines 19 reliées électriquement entre elles par l'un des cadres 32-34, dont le nombre de languettes 36 est égal à cinq (cf. figure 3b).

En outre, comme montré sur les figures 1b, 3a, 3b, chaque cadre 32-34 de phase comporte sur sa périphérie externe un terminal 41-43 de connexion pour l'interconnexion avec un connecteur de puissance (non représenté) lui-même relié à un onduleur décrit par exemple dans le document EP0831580. On appréciera que les terminaux 41-43 sont simplifiés par rapport aux terminaux décrits dans le document US 2005/0253466 du fait qu'ils font partie des cadres 32-34. Ces terminaux 41-43 sont rigides et d'un encombrement réduit.

En outre, pour avoir suffisamment de place pour pincer une languette 36 et une extrémité 191, 192 d'une bobine 19 à l'aide d'une électrode de soudage, un ensemble 47, formé par une languette 36 d'un des cadres de phase 32-34 et une patte 36 du cadre de neutre 31 destinées à être soudées sur les extrémités 191, 192 d'une même bobine 19, est configuré de manière à être positionné entre les côtés 50, 51 de ladite bobine 19 s'étendant entre les extrémités axiales de la bobine 19 (cf. figures 1b et 3a). Les languettes 36 de l'ensemble 47 sont en contact avec les zones en vis-à-vis des extrémités 191, 192, comme mieux visible à la figure 1b.

Par ailleurs, comme on le voit sur la figure 3a, le cadre de neutre 31 étant situé à une extrémité de l'empilement des cadres 31-34, les languettes 36 du cadre de neutre 31 sont dirigées, suivant une direction axiale, dans un sens inverse L1 par rapport à la direction L2 des languettes 36 des cadres de phase 32-34, de sorte que toutes les languettes 36 de l'interconnecteur 22 se situe à la même hauteur que les extrémités 191, 192 de bobine. Une telle configuration qui limite la distance entre les languettes 36 de l'interconnecteur 22 et les extrémités des bobines 19 permet de réduire la longueur des fils du bobinage et la hauteur totale de l'empilage de l'interconnecteur constitué des cadres 31-34 et de leur surmoulage respectif.

Comme montré sur les figures 1b et 3a, l'interconnecteur 22 comporte des pions 53 permettant, lors du montage, l'indexage de l'interconnecteur 22 par rapport aux bobines 19 afin de réduire les risques de mauvaises connexions entre les bobines. Ces pions d'indexage 53 d'extension axiale sont portés par une périphérie externe de l'interconnecteur 22. Ces pions d'indexage 53 sont destinés à coopérer avec des protubérances 54 sur les isolants de bobine définissant un passage pour un pion d'indexage 53.

L'interconnecteur 22 comporte également des pieds d'appui 61 destinés à reposer sur un rebord de la culasse 17 du stator 11. Les pieds d'appui 61 sont ici au nombre de quatre répartis de manière régulière autour du corps 38. Deux pieds d'appui 61 successifs sont ainsi écartés angulairement d'un angle de l'ordre de 90 degrés. Les pieds d'appui 61 permettent de maintenir le corps 38 du connecteur 22 au-dessus des bobines 19 sans que le corps 38 soit en contact avec les bobines 19. En outre, l'encombrement circonférentiel des pieds 19 est suffisamment faible pour éviter que l'interconnecteur 22 recouvre entièrement la périphérie externe des bobines 19, ce qui facilite l'imprégnation lors de la fabrication puis le refroidissement du stator 11 lors de son utilisation du fait de la grande zone de dégagement entre deux pieds d'appui 61 successifs et de l'espace entre le corps 38 de l'interconnecteur 22 et les bobines 19.

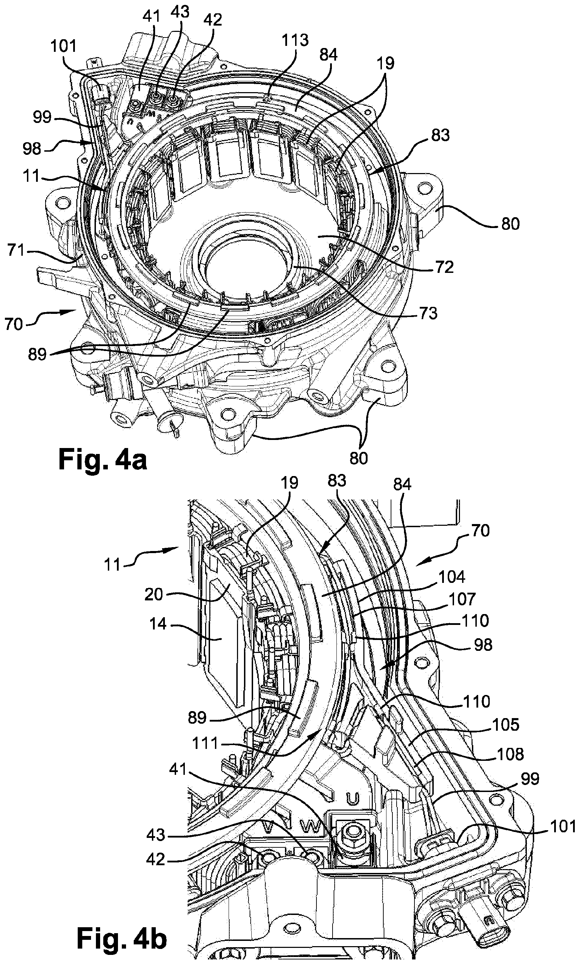

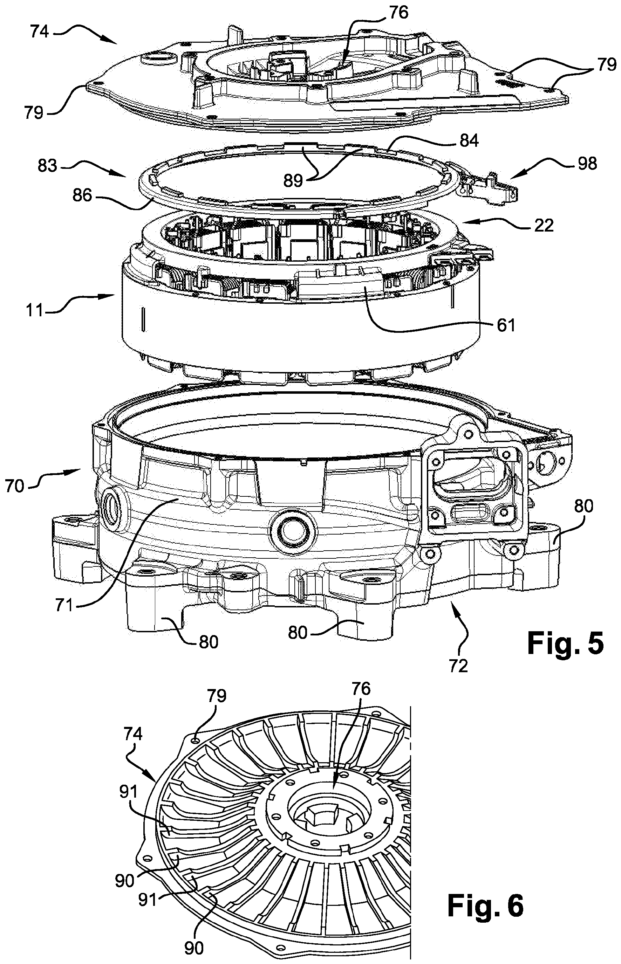

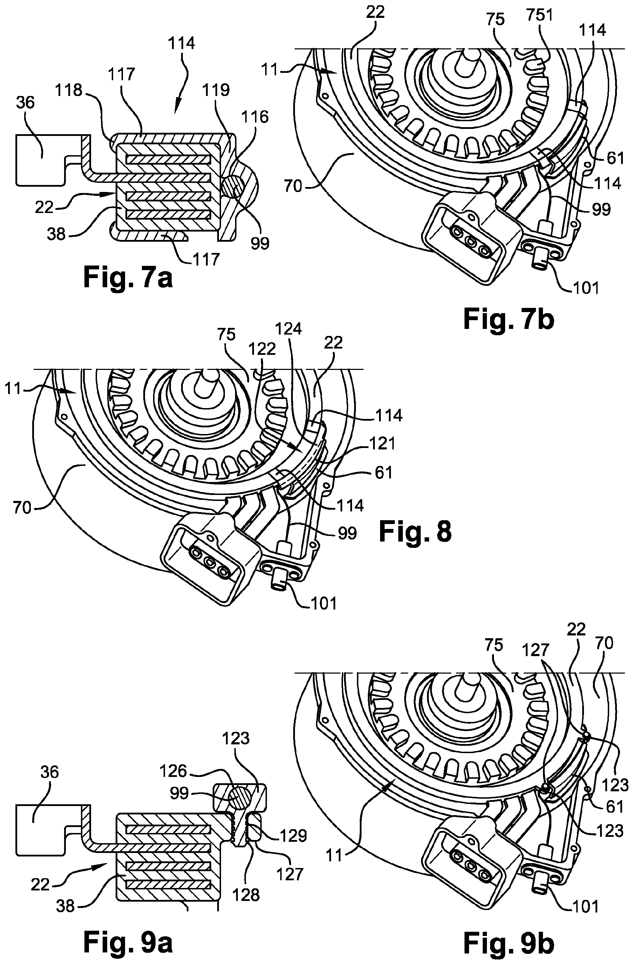

De préférence, l'ensemble formé par le stator 11 et l'interconnecteur 22 est monté par frettage à l'intérieur d'un boîtier 70 visible sur les figures 4a, 4b et 5. Ce boîtier 70 comporte une partie annulaire 71 d'orientation axiale s'étendant depuis une périphérie externe d'un fond 72 d'orientation sensiblement radial muni en son centre d'un palier 73 pour le montage à rotation d'une extrémité de l'arbre du rotor 75 bien visible à la figure 7b notamment. Ce boîtier 70 pourra par exemple être refroidi par eau. Le boîtier 70 est destiné à être fermé par un flasque de fermeture 74 montré sur la figure 5 muni en son centre d'un palier 76 pour le montage à rotation de l'autre extrémité de l'arbre du rotor 75. De petites masses 751 disposées au niveau de la périphérie externe du rotor pourront assurer son équilibrage.

Lors du montage de la machine électrique, le rotor 75 est assemblé avec le flasque de fermeture 74 avant la fixation dudit flasque 74 au boîtier 70. A cet effet, on utilise des vis (non représentées) traversant des ouvertures ménagées dans des oreilles 79 situées à la périphérie du flasque 74 pour insertion dans des trous taraudés ménagés dans des oreilles 80 du boîtier 70 situées en regard des oreilles 79 du flasque 74.

Un amortisseur 83 est monté compressé entre l'interconnecteur 22 et le flasque de fermeture 74. Un tel amortisseur 83 permet de limiter les mouvements relatifs des pièces les unes par rapport aux autres en cas de sollicitations vibratoires, afin de préserver les languettes 36 de soudure de l'interconnecteur 22 d'un endommagement éventuel.

Dans le mode de réalisation des figures 4a, 4b, et 5, l'amortisseur 83 de forme annulaire s'étend sur l'ensemble de la circonférence de l'interconnecteur 22. Plus précisément, l'amortisseur 83 comporte un corps 84 de forme annulaire d'orientation sensiblement radiale ayant un rebord 86 visible à la figure 5 s'étendant axialement sur une portion de la périphérie externe du corps 84. Ce rebord 86 assure un maintien radial de l'amortisseur 83 lorsque le corps 84 est plaqué via sa face interne contre l'interconnecteur 22 et que ledit rebord 86 est plaqué contre une face annulaire d'orientation radiale de la périphérie externe de l'interconnecteur.

Une face externe de l'amortisseur 83 tournée vers l'extérieur du stator 11 comporte des plots 89 destinés à venir en appui contre des nervures radiales 90, 91 ménagées dans la face interne du flasque 74 tournée vers l'intérieur du stator 11. Ces nervures radiales 90, 91 bien visibles sur la figure 6 notamment assurent une rigidification du flasque de fermeture 74.

En l'occurrence, le flasque de fermeture 74 comporte une alternance de nervures de faible épaisseur 90 et de grande épaisseur 91, l'épaisseur d'une nervure 90, 91 étant mesurée axialement par rapport au fond du flasque de fermeture 74. Les plots 89 sont destinés à venir en appui contre une nervure sur deux du flasque de fermeture 74. Dans ce mode de réalisation, les plots 89 viennent en appui contre les nervures 91 de plus grande épaisseur, c'est-à-dire celles qui sont les plus saillantes par rapport au fond du flasque de fermeture 74.

Les plots 89 de forme globalement parallélépipédique sont ici situés au niveau de la périphérie interne du corps 84 de l'amortisseur 83. Chaque plot 89 s'étend circonférentiellement suivant une portion angulaire de la périphérie interne de l'amortisseur 83. Les plots 89 sont espacés angulairement entre eux de manière régulière. Dans un exemple de réalisation, les plots 89 présentent une hauteur de l'ordre de 6mm et leur taux de compression est compris entre 11 et 53 pourcents.

En outre, un système de guidage 98 bien visible sur la figure 4b, assure le guidage d'au moins un fil de connexion 99 reliant une sonde de température (non représentée) implantée sur le stator 11, à un connecteur 101 déporté de la sonde. En effet, dans certains cas, plusieurs fils formant un faisceau pourront être guidés par le système de guidage 98. On notera que la sonde, de préférence de type CTN (à coefficient de température négatif), est reliée via le connecteur 101 à l'étage de commande (non représenté) apte à réguler l'alimentation des bobines du stator 11 en fonction de l'état thermique de la machine.

Le système de guidage 98 permet d'éviter le contact entre le fil 99 de connexion et les pièces de fonderie de la machine, en particulier celles du boîtier 70 afin d'éviter l'usure du fil par vibrations et frottements par exemple lors de l'utilisation de la machine. Le système de guidage 98 est intégré à l'amortisseur 83 et vient de matière avec ledit amortisseur 83 pour former une pièce d'un seul tenant.

Plus précisément, le système de guidage 98 comporte une première portion 104 de guidage apte à assurer un guidage du fil 99 autour de l'interconnecteur 22. La première portion 104 s'étend autour de la périphérie externe de l'amortisseur 83. Cette première portion 104 comporte une gorge 107 recevant le fil 99 délimitée par deux parois courbes sensiblement parallèles en regard l'une de l'autre reliées entre elles par un fond. Ces parois suivent la courbure de l'amortisseur annulaire 83. Une des parois est issue d'une périphérie externe de l'amortisseur annulaire 83.

Le système de guidage 98 comporte également une deuxième portion de guidage 105 apte à assurer un guidage du fil 99 depuis le point de mesure (pour la mesure de la température et/ou de la position du rotor par exemple) le long de l'interconnecteur 22 jusqu'au connecteur déporté 101 fixé sur une paroi du boîtier 70. Cette deuxième portion comporte une gorge 108 située dans le prolongement de la gorge 107 mais formant un angle par rapport à cette gorge de manière à s'éloigner de la périphérie externe de l'amortisseur pour déboucher à proximité du connecteur déporté 101.

De préférence, les gorges 107, 108 sont munies de rétrécissements de section locaux 110 permettant de maintenir le fil 99 en position par pincement à l'intérieur de la gorge 107, 108.

Avantageusement, le système de guidage 98 comporte en outre une zone 111 contenant une réserve de fil pour la réalisation d'un nouveau câblage en cas de défaut de la sonde de mesure. Cette zone 111 est par exemple définie par un détour en forme de U de la gorge 108 afin de rallonger le chemin du fil 99 entre l'interconnecteur 22 et le connecteur déporté 101. La zone de réserve de fil 111 est ménagée dans la deuxième portion de guidage 105 qui s'étend dans une partie dégagée du boîtier 70. En l'occurrence, la deuxième portion 105 présentant une forme globalement triangulaire, la réserve de fil est située dans la base du triangle se situant du côté de l'amortisseur 83.

De préférence, l'amortisseur 83 comporte un dispositif d'indexage 113 visible à la figure 4a permettant d'ajuster le positionnement angulaire de l'amortisseur 83 et du système de guidage 98 par rapport à l'interconnecteur 22 lors du montage. Ce dispositif d'indexage 113 est par exemple formé par un logement ménagé à une périphérie externe du corps 84 destiné à coopérer avec un pion de forme complémentaire appartenant à l'interconnecteur 22, ou inversement.

L'amortisseur 83 et le système de guidage 98 sont réalisés dans un matériau électriquement isolant, déformable pour absorber les chocs, et moulable pour obtenir aisément les formes précitées. Ce matériau pourra être par exemple un élastomère fluorocarboné.

Alternativement, dans le mode de réalisation des figures 7a et 7b, le système de guidage 98 est formé par deux clips 114 comportant chacun une gorge 116 apte à recevoir le fil de connexion 99 de la sonde de mesure. Comme cela ressort clairement de la figure 7a, ces deux clips 114 sont destinés à être maintenus par encliquetage sur le corps 38 de interconnecteur 22. Ces deux clips 114 sont en l'occurrence situés de part et d'autre d'un pied d'appui 61 de l'interconnecteur. Un des clips 114 est situé du côté de la sonde de mesure tandis que l'autre clip est situé du côté du connecteur déporté 101 de la sonde de mesure.

Ces clips 114 ayant une section en forme de U sont munis chacun de deux branches 117 en vis-à-vis déformables pour permettre le passage du corps 38 de l'interconnecteur 22 de manière que les branches 117 viennent se plaquer contre des faces d'extrémités axiales d'orientation radiale du corps de l'interconnecteur 22. Ces branches 117 sont munies de préférence chacune du côté de leur extrémité libre d'un rebord 118 destiné à venir en appui contre la périphérie annulaire interne de l'interconnecteur 22 pour assurer un maintien radial des clips 114 sur l'interconnecteur 22. Le positionnement des clips 114 est effectué en sorte que la gorge 116 ménagée dans le fond 119 du U est fermée par la face annulaire externe de l'interconnecteur 22 lorsque les clips 114 sont en place sur l'interconnecteur 22.

Dans la variante de réalisation de la figure 8, les clips 114 sont reliés entre eux par une partie intermédiaire 121 de manière à former une pièce 122 d'un seul tenant. Cette partie intermédiaire 121 suit la courbure de la périphérie externe de l'interconnecteur 22 sur une portion angulaire correspondant à l'encombrement circonférentiel du pied d'appui 61. Cette partie intermédiaire 121 est munie d'une gorge de passage 124 du fil de connexion 99 située dans le prolongement des gorges 116 ménagées dans les clips 114. Un tel mode de réalisation permet d'assurer un positionnement sous contrôle et répétable du système de guidage 98 en fixant la pièce 122 en sorte que le pied d'appui 61 se situe entre les clips d'extrémité 114.

Dans le mode de réalisation des figures 9a et 9b, le système de guidage 98 est formé par un ensemble de deux pions 123, en l'occurrence en forme de T, comportant chacun une ouverture 126 autorisant le passage du fil de connexion 99. Ces pions 123 sont destinés à coopérer par encliquetage avec des protubérances 127 obtenues par moulage s'étendant en saillie radiale depuis une périphérie externe de l'interconnecteur 22. Ces protubérances 127 sont positionnées de part et d'autre d'un pied d'appui 61 de l'interconnecteur 22. Afin de réaliser l'encliquetage des éléments, les pions 123 pourront par exemple comporter une série de collerettes élastiques 128 de forme tronconique destinées à être comprimées contre les parois internes d'ouvertures 129 ménagées dans les protubérances 127 après insertion du pion 123. Toute autre forme de système d'encliquetage adapté à l'application est bien entendu envisageable.

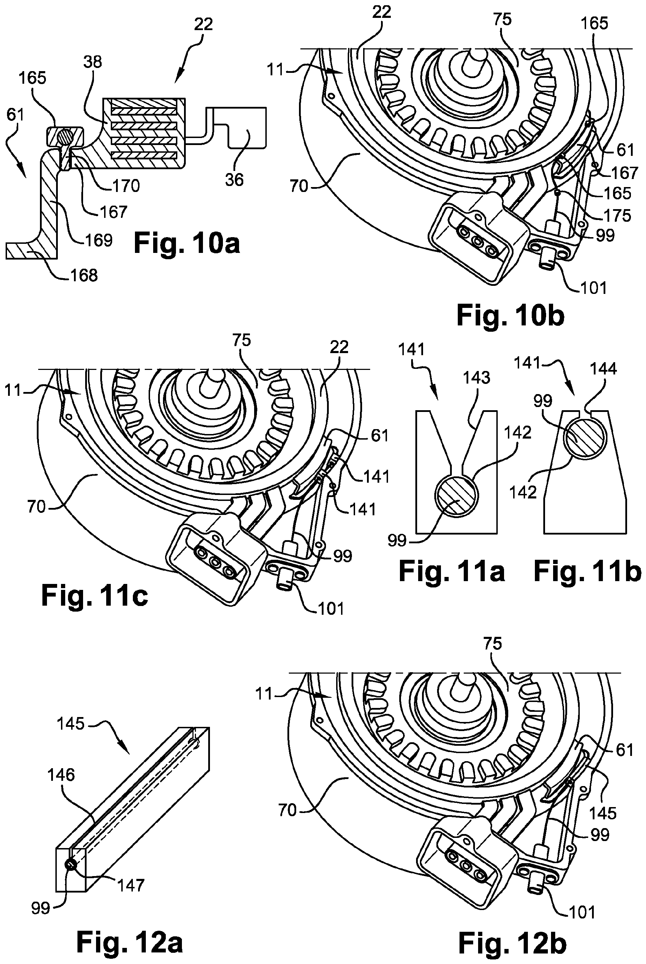

Dans la variante de réalisation des figures 10a et 10b, deux pions 165 analogues à ceux des figures 9a et 9b, sont destinés à coopérer par encliquetage avec un décrochement radial 167 du pied d'appui 61 issu d'une périphérie externe du corps 38 de l'interconnecteur 22 et relié à une extrémité 168 du pied d'appui 61 en contact avec l'interconnecteur 22 par l'intermédiaire d'une portion annulaire 169 d'orientation sensiblement axiale. A cet effet, un système d'encliquetage semblable à celui précédemment décrit pourra intervenir entre les pions 165 et des ouvertures 170 correspondantes ménagées dans le décrochement radial 167.

En outre, un troisième pion 175 visible sur la figure 10b pourra être positionné entre l'interconnecteur 22 et le connecteur déporté 101. Dans ce cas, le pion 175 coopère avec une ouverture réalisée directement dans le boîtier 70 de la machine électrique. Une telle réalisation permet d'assurer un guidage précis du fil de connexion 99 dans la zone du boîtier qui s'étend entre le point de mesure à proximité de l'interconnecteur 22 et le connecteur déporté 101.

Dans le mode de réalisation des figures 11a à 11c, le système de guidage 98 est formé par deux éléments 141 réalisés dans un matériau élastique munis chacun d'une gorge 142 pour le passage du fil de connexion 99. Comme cela ressort clairement de la figure 11c, ces éléments 141 sont destinés à être maintenus coincés entre un pied d'appui 61 de l'interconnecteur 22 et une face interne du boîtier 70 de la machine électrique. Un des éléments 141 est situé du côté de la sonde de mesure et l'autre élément 141 est situé du côté du connecteur déporté 101. Une telle réalisation permet de garantir le positionnement du fil de connexion 99 dans la mesure où elle évite toute interférence avec le flasque de fermeture 74.

L'élément 141 pourra comporter une échancrure 143 en forme de V pour faciliter l'insertion du fil de connexion à l'intérieur de la gorge 142 (cf. figure 11a), ou présenter une fente 144 rectiligne débouchant sur la gorge 142 (cf. figure 11b). Le cas échéant, la forme des éléments 141 pourra être adaptée aux contraintes géométriques de leur environnement, l'élément 141 de la figure 11b présentant ainsi par exemple des bords latéraux inclinés ayant une forme complémentaire de la zone du boîtier 70 dans laquelle il est destiné à être implanté.

Dans le mode de réalisation des figures 12a et 12b, le système de guidage 98 prend la forme d'un élément élastique 145 unique de forme allongée muni d'une fente 146 débouchant vers une gorge 147 pour le passage du fil de connexion 99. L'élément élastique 145 en l'occurrence de forme globalement parallélépipédique est destiné à s'étendre circonférentiellement le long du pied d'appui 61 de l'interconnecteur 22 de manière à être maintenu coincé entre la périphérie externe dudit pied d'appui 61 et une face interne du boîtier 70.

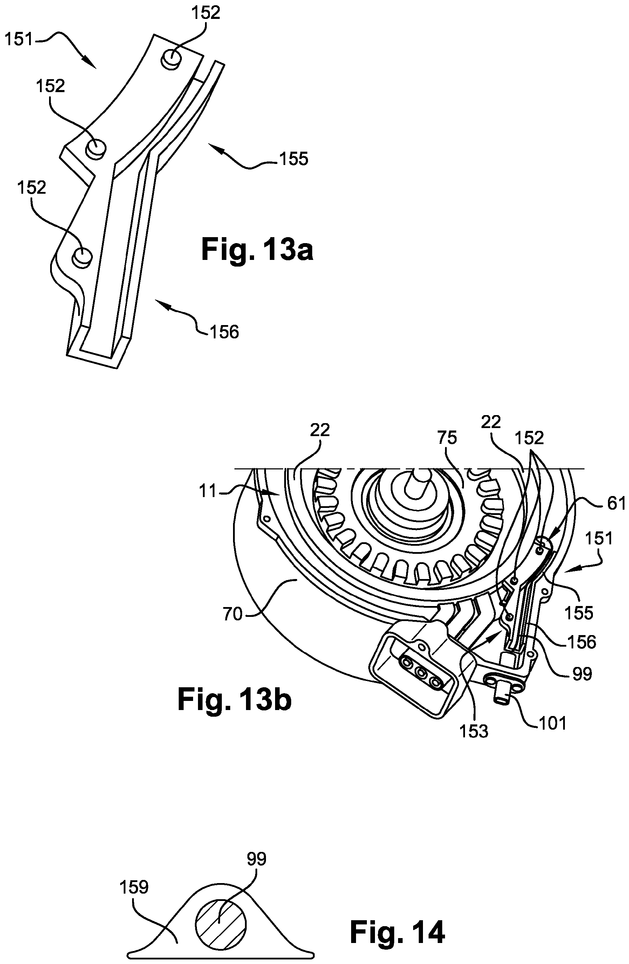

Dans le mode de réalisation des figures 13a et 13b, le système de guidage 98 est formé par une goulotte 151 maintenue par encliquetage sur un pied d'appui 61 de l'interconnecteur 22 et dans une zone du boîtier 70 située entre l'interconnecteur 22 et le connecteur déporté 101. A cet effet, la goulotte 151 comprend des ergots 152 destinés à coopérer par encliquetage avec des ouvertures 153 ménagées dans le pied d'appui 61 et dans le boîtier 70 de la machine électrique. Plus précisément, cette goulotte 151 comporte une cuvette en forme de U dans laquelle est positionné le fil de connexion 99. Cette goulotte 151 présente une première partie 155 s'étendant circonférentiellement le long de la périphérie externe du corps de l'interconnecteur 22 et une deuxième partie 156 s'étendant entre le point de mesure à proximité de l'interconnecteur 22 et le connecteur déporté 101.

Dans une autre variante de réalisation montrée à la figure 14, on utilise une résine 159 polymérisable à température ambiante, telle que de la résine connue sous la marque "Dow Corning" de référence 7091. Le fil de connexion 99 sera ainsi maintenu par au moins un premier volume de résine positionné sur la face supérieure du pied d'appui 61 de l'interconnecteur 22 et de préférence un deuxième volume de résine positionné sur une face interne du boîtier 70 sur le chemin du fil 99 entre le point de mesure à proximité de l'interconnecteur 22 et le connecteur déporté 101.

Le rotor 75 de la machine électrique pourra être un rotor à griffes comme dans le document FR2890798. En variante, le rotor pourra être à pôles saillants. En variante, le rotor pourra être un rotor à aimants permanents comme dans les documents EP0803962 et EP0831580 précités. En variante, le rotor à griffes ou à pôles saillants pourra comporter également des aimants permanents. En variante, les dents 14 pourront ne pas être réparties circonférentiellement de manière régulière.

L'homme du métier pourra bien entendu modifier la configuration de l'interconnecteur 22 précédemment décrit sans sortir du cadre de l'invention. Ainsi notamment, le stator 11 pourra présenter en variante un bobinage quadriphasé, pentaphasé, voire même hexaphasé. Dans ce cas, l'interconnecteur 22 comporte respectivement 5, 6, 7 cadres empilés les uns sur les autres, le cadre externe constituant le point neutre.

La machine électrique tournante pourra appartenir à un véhicule automobile et être de manière précitée un alternateur, un alterno-démarreur qui est un alternateur réversible, un moteur électrique ou un ralentisseur électromagnétique.

Dans le cadre d'un alternateur appartenant à un prolongateur d'autonomie d'un véhicule électrique (Range-extender en Anglais), le rotor pourra être un rotor à aimants permanents avec plusieurs aimants par logement soumis à l'action d'un ressort comme décrit dans la demande FR12/54733 déposée le 24/05/2012. On appréciera que ce type de machine est compact axialement tout en étant d'une grande puissance.

## Revendications

1. Machine électrique tournante comportant un stator (11) muni de dents (14) autour desquelles sont enroulées un ensemble de bobines (19), un interconnecteur (22) annulaire en appui sur le stator (11) muni de languettes auxquelles sont soudées des extrémités (191, 192) des bobines (19) pour formation de phases (U, V, W) de la machine électrique, et au moins une sonde de température reliée à un connecteur déporté (101) par l'intermédiaire d'au moins un fil de connexion (99), ladite machine électrique comportant en outre un système guidage (98) configuré pour assurer un guidage du fil de connexion (99) autour de l'interconnecteur (22) entre ladite sonde de température et le connecteur déporté (101), ledit système de guidage (98) étant intégré dans un amortisseur (83) annulaire destiné à être monté compressé entre l'interconnecteur (22) et un flasque de fermeture (74) de la machine électrique.

2. Machine selon la revendication 1, **caractérisée** en ce le système de guidage (98) est configuré en outre pour assurer un guidage du fil de connexion (99) depuis un point de mesure à proximité de l'interconnecteur (22) jusqu'au connecteur déporté.

3. Machine selon l'une des revendications 1 à 2, **caractérisé en ce que** le système de guidage (98) comporte une réserve de fil (111).

4. Machine selon les revendications 2 et 3, **caractérisée en ce que** la réserve de fil (111) est ménagée dans une portion du système de guidage (98) s'étendant entre le point de mesure à proximité de l'interconnecteur (22) et le connecteur déporté (101).

5. Machine selon l'une des revendications 1 à 4, **caractérisée en ce que** le système de guidage (98) comporte une gorge (107, 108) à l'intérieur de laquelle est positionné le fil de connexion (99) munie de rétrécissements de section locaux (110) pour le maintien du fil de connexion (99).

6. Machine selon l'une des revendications 1 à 5, **caractérisée en ce que** le système de guidage (98) est formé par deux clips (114) comportant chacun une gorge (116) de passage du fil de connexion (99) destinés à être maintenus sur l'interconnecteur (22) par encliquetage.

7. Machine selon la revendication 6, **caractérisée en ce que** les clips (114) sont reliés entre eux par une partie intermédiaire (121) munie d'une gorge de passage (124) du fil de connexion (99) située dans le prolongement des gorges (116) des deux clips (114) de manière à former une pièce (122) d'un seul tenant.

8. Machine selon l'une des revendications 1 à 4, **caractérisée en ce que** le système de guidage (98) est formé par un ensemble d'au moins deux pions (123, 175) comportant une ouverture (126) autorisant le passage du fil de connexion destinés à coopérer avec une partie de l'interconnecteur (22).

9. Machine selon la revendication 10, **caractérisée en ce que** les pions (123) sont aptes à coopérer avec des protubérances (127) s'étendant en saillie radiale depuis une périphérie externe de l'interconnecteur (22).

10. Machine selon la revendication 8, **caractérisée en ce que** les pions (175) sont aptes à coopérer avec un décrochement radial (167) d'un pied d'appui (61) de l'interconnecteur.

11. Machine selon l'une des revendications 9 à 10, **caractérisée en ce que** un troisième pion (175) est situé entre l'interconnecteur (22) et le connecteur déporté (101).

12. Machine selon l'une des revendications 1 à 5, **caractérisée en ce que** le système de guidage (98) est formé par au moins deux éléments élastiques (141) munis chacun d'une gorge (142) pour le passage du fil de connexion (99) aptes à être maintenus coincés entre un pied d'appui (61) de l'interconnecteur (22) et une face interne d'un boîtier (70) de la machine électrique.

13. Machine selon l'une des revendications 1 à 5, **caractérisée en ce que** le système de guidage (98) est formé par un élément élastique (145) unique de forme allongée muni d'une gorge (147) pour le passage du fil de connexion (99) s'étendant circonférentiellement le long d'un pied d'appui (61) de l'interconnecteur en étant maintenu coincé entre ledit pied d'appui (61) et une face interne d'un boîtier de la machine électrique.

14. Machine selon l'une des revendications 1 à 5, **caractérisée en ce que** le système de guidage (98) prend la forme d'une goulotte (151) maintenue par encliquetage au moyen d'ergots (152) sur un pied d'appui (61) de l'interconnecteur (22) et dans une zone d'un boîtier (70) de la machine électrique située entre l'interconnecteur (22) et le connecteur déporté (101).

15. Machine selon l'une des revendications 1 à 5, **caractérisée en ce que** le système de guidage (98) est formé par au moins un volume de résine polymérisable à température ambiante positionné sur le pied d'appui de l'interconnecteur (61).

## Patentansprüche

1. Rotierende elektrische Maschine, die einen Stator (11), der mit Zähnen (14) versehen ist, um die eine Einheit von Spulen (19) gewickelt ist, einen ringförmigen Zwischenverbinder (22) in Auflage auf dem Stator (11), der mit Zungen versehen ist, an die Enden (191, 192) der Spulen (19) zur Bildung von Phasen (U, V, W) der elektrischen Maschine geschweißt sind, und mindestens einen Temperaturfühler enthält, der mit einem ausgelagerten Verbinder (101) mittels mindestens eines Verbindungsdrahts (99) verbunden ist, wobei die elektrische Maschine außerdem ein Führungssystem (98) aufweist, das konfiguriert ist, eine Führung des Verbindungsdrahts (99) um den Zwischenverbinder (22) zwischen dem Temperaturfühler und dem ausgelagerten Verbinder (101) zu gewährleisten, wobei das Führungssystem (98) in einen ringförmigen Dämpfer (83) integriert ist, der dazu bestimmt ist, komprimiert zwischen den Zwischenverbinder (22) und einen Verschlussflansch (74) der elektrischen Maschine montiert zu werden.

2. Maschine nach Anspruch 1, **dadurch gekennzeichnet, dass** das Führungssystem (98) außerdem konfiguriert ist, eine Führung des Verbindungsdrahts (99) von einem Messpunkt in der Nähe des Zwischenverbinders (22) bis zum ausgelagerten Verbinder zu gewährleisten.

3. Maschine nach einem der Ansprüche 1 bis 2, **dadurch gekennzeichnet, dass** das Führungssystem (98) eine Drahtreserve (111) aufweist.

4. Maschine nach den Ansprüchen 2 und 3, **dadurch gekennzeichnet, dass** die Drahtreserve (111) in einem Abschnitt des Führungssystems (98) vorgesehen ist, der sich zwischen dem Messpunkt in der Nähe des Zwischenverbinders (22) und dem ausgelagerten Verbinder (101) erstreckt.

5. Maschine nach einem der Ansprüche 1 bis 4, **dadurch gekennzeichnet, dass** das Führungssystem (98) eine Rille (107, 108) aufweist, in deren Inneren der Verbindungsdraht (99) positioniert ist, die mit lokalen Querschnittsverengungen (110) für den Halt des Verbindungsdrahts (99) versehen ist.

6. Maschine nach einem der Ansprüche 1 bis 5, **dadurch gekennzeichnet, dass** das Führungssystem (98) von zwei Clips (114) gebildet wird, die je eine Durchgangsrille (116) des Verbindungsdrahts (99) aufweisen, die dazu bestimmt sind, durch Einrasten auf dem Zwischenverbinder (22) gehalten zu werden.

7. Maschine nach Anspruch 6, **dadurch gekennzeichnet, dass** die Clips (114) durch einen Zwischenbereich (121) miteinander verbunden sind, der mit einer Durchgangsrille (124) des Verbindungsdrahts (99) versehen ist, die sich in der Verlängerung der Rillen (116) der zwei Clips (114) befindet, um ein einstückiges Bauteil (122) zu bilden.

8. Maschine nach einem der Ansprüche 1 bis 4, **dadurch gekennzeichnet, dass** das Führungssystem (98) von einer Einheit von mindestens zwei Flachstiften (123, 175) gebildet wird, die eine Öffnung (126) aufweisen, die den Durchgang des Verbindungsdrahts erlaubt, die dazu bestimmt sind, mit einem Teil des Zwischenverbinders (22) zusammenzuwirken.

9. Maschine nach Anspruch 10, **dadurch gekennzeichnet, dass** die Flachstifte (123) mit Vorsprüngen (127) zusammenwirken können, die sich radial vorspringend von einem Außenumfang des Zwischenverbinders (22) erstrecken.

10. Maschine nach Anspruch 8, **dadurch gekennzeichnet, dass** die Flachstifte (175) mit einem radialen Rücksprung (167) eines Auflagefußes (61) des Zwischenverbinders zusammenwirken können.

11. Maschine nach einem der Ansprüche 9 bis 10, **dadurch gekennzeichnet, dass** ein dritter Flachstift (175) sich zwischen dem Zwischenverbinder (22) und dem ausgelagerten Verbinder (101) befindet.

12. Maschine nach einem der Ansprüche 1 bis 5, **dadurch gekennzeichnet, dass** das Führungssystem (98) von mindestens zwei elastischen Elementen (141) gebildet wird, die je mit einer Rille (142) für den Durchgang des Verbindungsdrahts (99) versehen sind, die zwischen einem Auflagefuß (61) des Zwischenverbinders (22) und einer Innenseite eines Gehäuses (70) der elektrischen Maschine eingeklemmt gehalten werden können.

13. Maschine nach einem der Ansprüche 1 bis 5, **dadurch gekennzeichnet, dass** das Führungssystem (98) von einem einzigen elastischen Element (145) länglicher Form gebildet wird, das mit einer Rille (147) für den Durchgang des Verbindungsdrahts (99) versehen ist, die sich in Umfangsrichtung entlang eines Auflagefußes (61) des Zwischenverbinders erstreckt, indem es zwischen dem Auflagefuß (61) und einer Innenseite eines Gehäuses der elektrischen Maschine eingeklemmt gehalten wird.

14. Maschine nach einem der Ansprüche 1 bis 5, **dadurch gekennzeichnet, dass** das Führungssystem (98) die Form einer Rinne (151) annimmt, die durch Einrasten mittels Zapfen (152) auf einem Auflagefuß (61) des Zwischenverbinders (22) und in einem Bereich eines Gehäuses (70) der elektrischen Maschine gehalten wird, der sich zwischen dem Zwischenverbinder (22) und dem ausgelagerten Verbinder (101) befindet.

15. Maschine nach einem der Ansprüche 1 bis 5, **dadurch gekennzeichnet, dass** das Führungssystem (98) von mindestens einem Volumen aus bei Umgebungstemperatur polymerisierbarem Harz gebildet wird, das auf dem Auflagefuß des Zwischenverbinders (61) positioniert ist.

## Claims

1. Rotating electrical machine comprising a stator (11) provided with teeth (14) about which are wound a set of coils (19), an annular interconnector (22) bearing on the stator (11) provided with tongues to which are welded ends (191, 192) of the coils (19) to form phases (U, V, W) of the electrical machine, and at least one temperature probe connected to a remote connector (101) by means of at least one connection wire (99), said electrical machine further comprising a guiding system (98) configured such as to guide the connection wire (99) around the interconnector (22) between said temperature probe and the remote connector (101), said guiding system (98) being integrated in an annular damper (83) designed to be mounted compressed between the interconnector (22) and a closure plate (74) of the electrical machine.

2. Machine according to Claim 1, **characterized in that** the guiding system (98) is further configured such as to guide the connection wire (99) from a measurement point close to the interconnector (22) as far as the remote connector.

3. Machine according to one of Claims 1 to 2, **characterized in that** the guiding system (98) comprises a wire reserve (111).

4. Machine according to Claims 2 and 3, **characterized in that** the wire reserve (111) is provided in a portion of the guiding system (98) extending between the measurement point close to the interconnector (22) and the remote connector (101).

5. Machine according to one of Claims 1 to 4, **characterized in that** the guiding system (98) comprises a groove (107, 108) inside which is positioned the connection wire (99) and which is provided with local cross-section restrictions (110) for holding the connection wire (99).

6. Machine according to one of Claims 1 to 5, **characterized in that** the guiding system (98) is formed by two clips (114) each comprising a groove (116) for the passage of the connection wire (99) which are designed to be held on the interconnector (22) by snap-fitting.

7. Machine according to Claim 6, **characterized in that** the clips (114) are connected together by an intermediate part (121) provided with a groove (124) for the passage of the connection wire (99) located in the extension of the grooves (116) of the two clips (114) such as to form a monoblock component (122).

8. Machine according to one of Claims 1 to 4, **characterized in that** the guiding system (98) is formed by an assembly of at least two studs (123, 175) comprising an opening (126) allowing the passage of the connection wire, which are designed to interact with a part of the interconnector (22).

9. Machine according to Claim 10, **characterized in that** the studs (123) are capable of interacting with protuberances (127) extending so as to project radially from an external periphery of the interconnector (22).

10. Machine according to Claim 8, **characterized in that** the studs (175) are capable of interacting with a radial recess (167) of a support foot (61) of the interconnector.

11. Machine according to one of Claims 9 to 10, **characterized in that** a third stud (175) is located between the interconnector (22) and the remote connector (101).

12. Machine according to one of Claims 1 to 5, **characterized in that** the guiding system (98) is formed by at least two elastic elements (141) each provided with a groove (142) for the passage of the connection wire (99) which are capable of being held wedged between a support foot (61) of the interconnector (22) and an internal face of a housing (70) of the electrical machine.

13. Machine according to one of Claims 1 to 5, **characterized in that** the guiding system (98) is formed by a single elastic element (145) of elongate form, provided with a groove (147) for the passage of the connection wire (99) extending circumferentially along a support foot (61) of the interconnector while being held wedged between said support foot (61) and an internal face of a casing of the electrical machine.

14. Machine according to one of Claims 1 to 5, **characterized in that** the guiding system (98) takes the form of a trough (151) held by snap-fitting by means of pins (152) on a support foot (61) of the interconnector (22) and in a zone of a housing (70) of the electrical machine located between the interconnector (22) and the remote connector (101).

15. Machine according to one of Claims 1 to 5, **characterized in that** the guiding system (98) is formed by at least one volume of resin polymerizable at ambient temperature, positioned on the support foot of the interconnector (61).
